# EUROPEAN PATENT APPLICATION

(11) **EP 4 598 108 A1**
(43) Date of publication of application: **06.08.2025**
(21) Application number: 23872994.1
(22) Date of filing: 25.09.2023
(51) Int. Cl.: H04W 24/10, H04W 16/28, H04B 17/345, H04B 7/155, H04W 84/04

(54) **OPERATION METHOD OF DEVICE IN WIRELESS COMMUNICATION SYSTEM AND DEVICE USING SAME METHOD**

(30) Priority: 30.09.2022 KR 20220125556
(71) Applicant: LG Electronics Inc., Yeongdeungpo-gu Seoul 07336 (KR)
(72) Inventor: YOU, Hyangsun, Seoul 06772 (KR); KO, Hyunsoo, Seoul 06772 (KR); BAN, Choongsang, Seoul 06772 (KR); SHIM, Jaenam, Seoul 06772 (KR)
(74) Representative: Frenkel, Matthias Alexander
(86) International application number: PCT/KR2023/014593
(87) International publication number: WO 2024/071877

(57) **Abstract**

An operation method of a device in a wireless communication system and a device using the method are provided. The method may be performed by an NCR including NCR-MT and NCR-Fwd. The NCR-MT performs measurement, and the NCR-MT transmits feedback information based on a result of the measurement to a base station. The feedback information includes interference information on a pair of a downlink reception beam in a control link through which the NCR-MT receives control information from the base station and a downlink transmission beam in an access link through which the NCR-Fwd transmits a signal to a terminal.

## Description

### TECHNICAL FIELD

The present disclosure relates to a method of operating a device in a wireless communication system and a device using the method.

### BACKGROUND ART

As a growing number of communication devices require higher communication capacity, there is a need for advanced mobile broadband communication as compared to existing radio access technology (RAT). Massive machine-type communication (MTC), which provides a variety of services anytime and anywhere by connecting a plurality of devices and a plurality of objects, is also one major issue to be considered in next-generation communication. In addition, designs for communication systems considering services or a user equipment (UE) sensitive to reliability and latency are under discussion. Introduction of next-generation RAT considering enhanced mobile broadband communication, massive MTC, and ultra-reliable and low-latency communication (URLLC) is under discussion. In this disclosure, for convenience of description, this technology may be referred to as new RAT or new radio (NR).

Meanwhile, a repeater (also referred to as a relay) may be introduced into NR. The repeater is network-controlled repeater (NCR). NCR may include NCR-MT (mobile termination) and NCR-Fwd (Forwarding). The NCR-MT may perform a role of communicating with the base station and controlling the NCR-Fwd. The NCR-Fwd performs signal forwarding function. That is, a signal received from a base station can be transmitted to a UE, or a signal received from a UE can be transmitted to the base station.

NCR can perform downlink reception operation through the control link between the base station and NCR-MT and the backhaul link between the base station and NCR-Fwd, while performing downlink transmission operation through the access link between NCR-Fwd and the UE. In this case, the downlink signal transmitted through the access link may interfere with the downlink reception through the control link and backhaul link. Then, the downlink reception performance in the control link of the NCR-MT may be degraded.

### DISCLOSURE

### TECHNICAL PROBLEM

The technical problem to be solved by the present disclosure is to provide a method of operating a device in a wireless communication system and a device using the method.

### TECHNICAL SOLUTION

Provided are a method of operating a network-controlled repeater (NCR) including an NCR-mobile termination (MT) and an NCR-forward (Fwd) in a wireless communication system and an apparatus using the method. The method includes performing, by the NCR-MT, a measurement and transmitting, by the NCR-MT, feedback information based on a result of the measurement to a base station. In this case, the feedback information includes interference information for a pair of a downlink reception (DL Rx) beam in a control link (C-link) through which the NCR-MT receives control information from the base station and a downlink transmission (DL Tx) beam in an access link through which the NCR-Fwd transmits a signal to a user equipment (UE).

### ADVANTAGEOUS EFFECTS

According to the present disclosure, it is possible to control not to use a downlink transmission beam of an access link that has a significant interference effect on NCR-MT.

Specifically, the network can prevent degradation of downlink reception performance in the control link of NCR-MT by adjusting the downlink reception beam direction of the control link and the downlink transmission beam direction of the access link.

### BRIEF DESCRIPTION OF THE DRAWINGS

FIG. 1 illustrates a system structure of a New Generation Radio Access Network (NG-RAN) to which NR is applied.
FIG. 2 is a diagram showing a wireless protocol architecture for a user plane.
FIG. 3 is a diagram showing a wireless protocol architecture for a control plane.
FIG. 4 illustrates a functional division between an NG-RAN and a 5GC.
FIG. 5 illustrates an example of a frame structure that may be applied in NR.
FIG. 6 illustrates a slot structure of the NR frame.
FIG. 7 illustrates a CORESET.
FIG. 8 shows an example of a frame structure for a new radio access technology.
FIG. 9 illustrates a structure of self-contained slot.
FIG. 10 illustrates physical channels and general signal transmission.
FIG. 11 illustrates transport network architectures for 5G.
FIG. 12 shows an example of a topology in which an NCR performs transmission and reception between a base station and a UE.
FIG. 13 is a diagram comparing operations of an NCR and an existing RF repeater.
FIG. 14 illustrates the structure of NCR.
FIG. 15 shows an example where an access link transmission signal of NCR interferes with the control link and backhaul link.
FIG. 16 illustrates an operation method of an NCR including a network-controlled repeater (NCR)-MT (mobile termination) and NCR-Fwd (forward) in a wireless communication system.
FIG. 17 is an example of applying the method of FIG. 16.
FIG. 18 illustrates signaling between a base station and a UE and operation of the base station when applying the method of FIG. 16.
FIG. 19 illustrates a wireless device applicable to this specification.
FIG. 20 illustrates an example of a structure of a signal processing module.
FIG. 21 shows another example of the structure of a signal processing module in a transmission device.
FIG. 22 illustrates an example of a wireless communication device according to an embodiment of the present disclosure.
FIG. 23 shows another example of a wireless device.
FIG. 24 shows another example of a wireless device applied to the present specification.
FIG. 25 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

A wireless communication system to which the present disclosure may be referred to as an Evolved-UMTS Terrestrial Radio Access Network (E-UTRAN) or a Long Term Evolution (LTE)/LTE-A system, for example.

The E-UTRAN includes at least one base station (BS) which provides a control plane and a user plane to a user equipment (UE). The UE may be fixed or mobile, and may be referred to as another terminology, such as a mobile station (MS), a user terminal (UT), a subscriber station (SS), a mobile terminal/termination (MT), a wireless device, terminal, etc. The BS is generally a fixed station that communicates with the UE and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC), more specifically, to a mobility management entity (MME) through S1-MME and to a serving gateway (S-GW) through S1-U.

The EPC includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present disclosure for convenience.

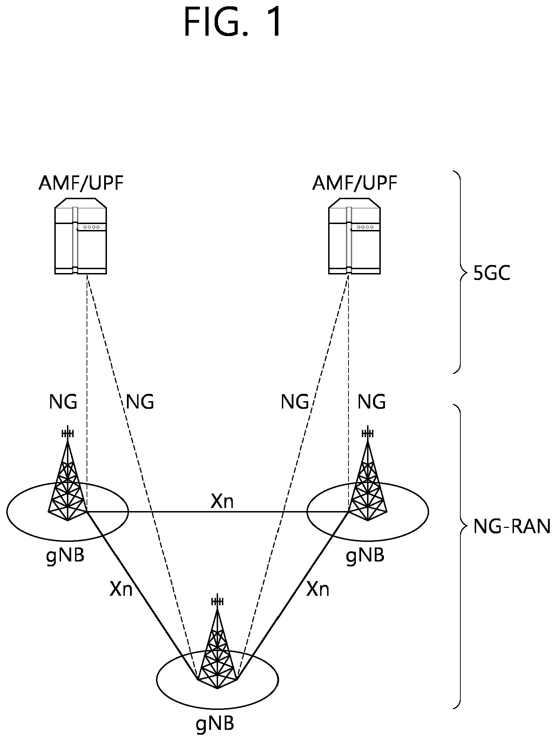

FIG. 1 illustrates a system structure of a next generation radio access network (NG-RAN) to which NR is applied.

Referring to FIG. 1, the NG-RAN may include a base station (e.g., gNB and/or an eNB) that provides user plane and control plane protocol termination to a UE. FIG. 1 illustrates the case of including only gNBs. The gNB and the eNB are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

Meanwhile, layers of a radio interface protocol between the UE and the network may be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

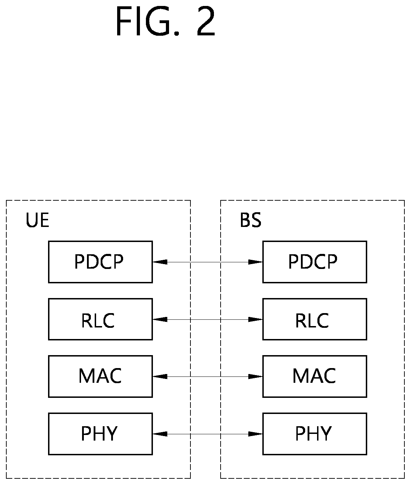

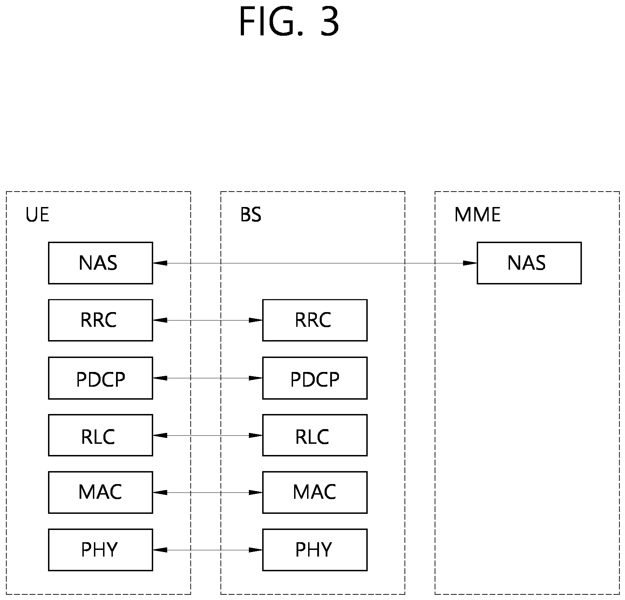

FIG. 2 is a diagram showing a wireless protocol architecture for a user plane. FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for transmission of subframe.

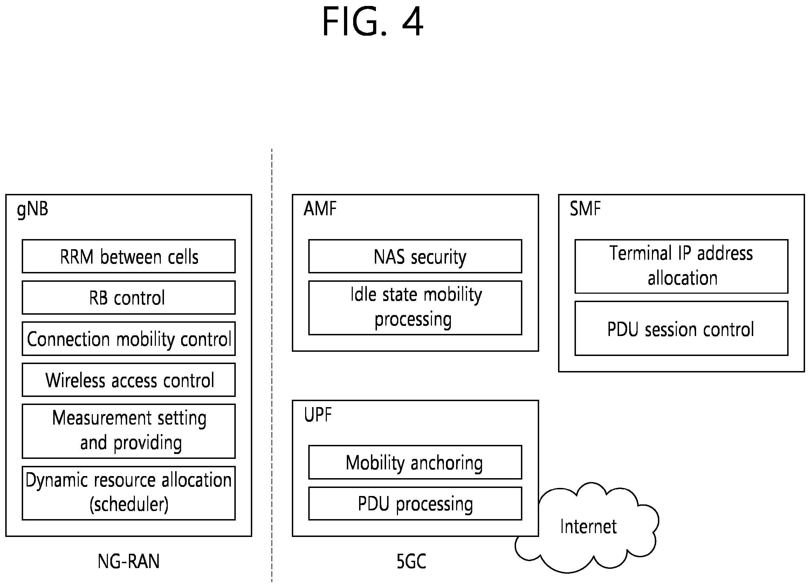

FIG. 4 illustrates a functional division between an NG-RAN and a 5GC.

Referring to FIG. 4, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

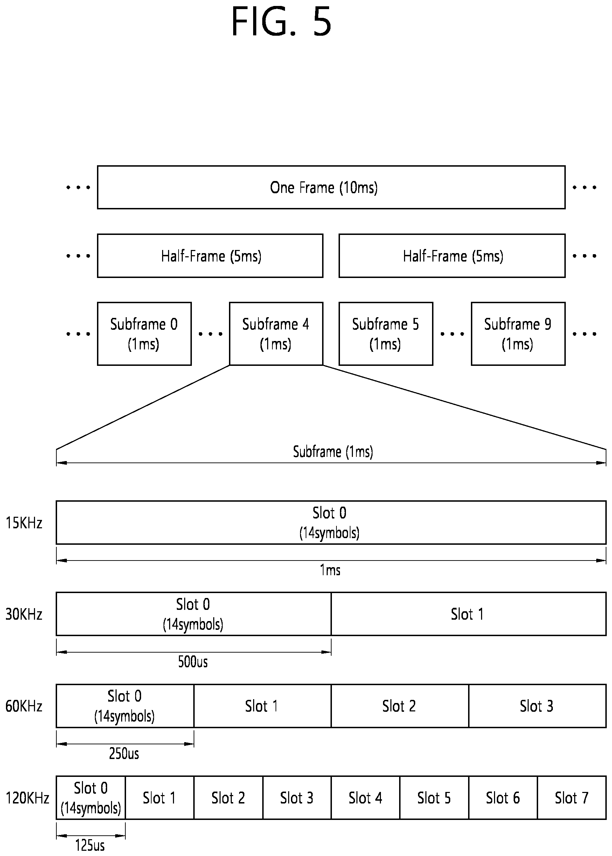

FIG. 5 illustrates an example of a frame structure that may be applied in NR.

Referring to FIG. 5, a radio frame (which may be called as a frame hereinafter) may be used for uplink and downlink transmission in NR. A frame has a length of 10 ms and may be defined as two 5 ms half-frames (Half-Frame, HF). A half-frame may be defined as five 1 ms subframes (Subframe, SF). A subframe may be divided into one or more slots, and the number of slots in a subframe depends on subcarrier spacing (SCS). Each slot includes 12 or 14 OFDM(A) symbols according to a cyclic prefix (CP). When a normal CP(=it also be called general CP or common CP) is used, each slot includes 14 symbols. When an extended CP is used, each slot includes 12 symbols. Here, the symbol may include an OFDM symbol (or a CP-OFDM symbol) and an SC-FDMA symbol (or a DFT-s-OFDM symbol).

The following table 1 illustrates a subcarrier spacing configuration µ.

**[Table 1]**

| µ | Δf = 2^{µ}·15[kHz] | Cyclic prefix |
|---|---|---|
| 0 | 15 | Normal |
| 1 | 30 | Normal |
| 2 | 60 | Normal |
| | | Extended |
| 3 | 120 | Normal |
| 4 | 240 | Normal |

The following table 2 illustrates the number of slots in a frame (N^{frame,µ}ₛₗₒₜ), the number of slots in a subframe (N^{subframe,µ}ₛₗₒₜ), the number of symbols in a slot (N^{slot}_{symb}), and the like, according to subcarrier spacing configurations µ.

**[Table 2]**

| µ | N^{slot}_{symb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

In FIG. 5, µ=0, 1, 2, and 3 are exemplified.

Table 2-1 below exemplifies that the number of symbols per slot, the number of slots per frame, and the number of slots per subframe vary according to SCS when the extended CP is used.

**[Table 2-1]**

| SCS (15·2^{µ}) | N^{slot}_{symb} | N^{frame,u}ₛₗₒₜ | N^{subframe,u}ₛₗₒₜ |
|---|---|---|---|
| 60kHz (µ=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

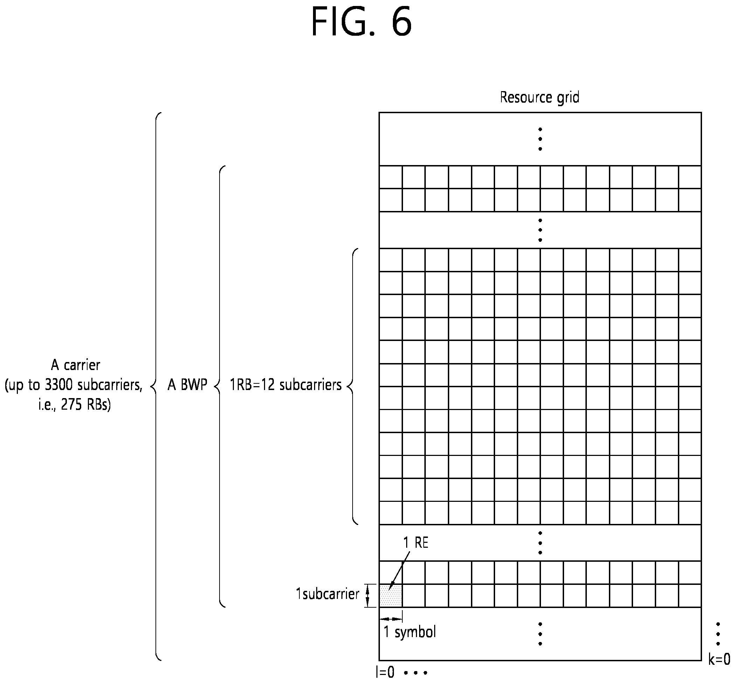

FIG. 6 illustrates a slot structure.

A slot may comprise a plurality of symbols in a time domain. For example, in case of a normal CP, one slot may include 14 symbols (or 7 symbols). However, in case of an extended CP, one slot may include 12 symbols (or 6 symbols). The carrier may include a plurality of subcarriers in a frequency domain. A resource block (RB) may be defined as a plurality of consecutive subcarriers (e.g., 12) in the frequency domain. A bandwidth part (BWP) may be defined as a plurality of consecutive (P)RBs in the frequency domain, and may correspond to one numerology (e.g., SCS, CP length, etc.). A carrier may include a maximum of N (e.g., 5) BWPs. Data communication is performed through the activated BWP, and only one BWP can be activated for one UE. Each element in the resource grid is referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring means decoding each PDCCH candidate according to a downlink control information (DCI) format. The UE monitors a set of PDCCH candidates in one or more control resource sets (CORESETs, described below) on the activated DL BWP of each activated serving cell for which PDCCH monitoring is configured according to a corresponding search space set.

A new unit called a control resource set (CORESET) may be introduced in the NR. The UE may receive a PDCCH in the CORESET.

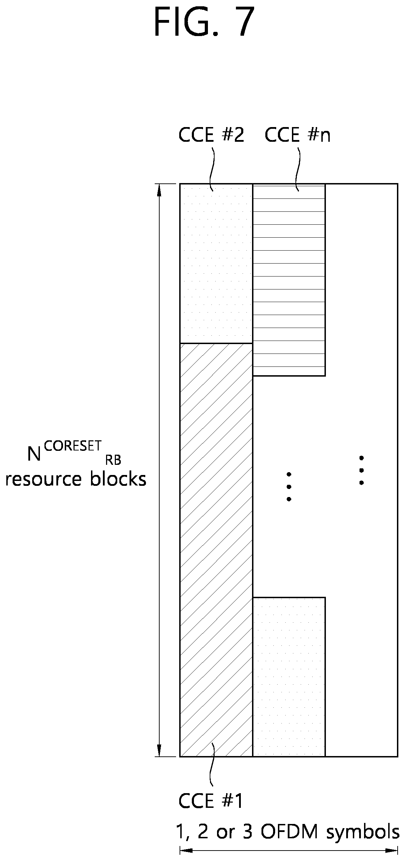

FIG. 7 illustrates a CORESET.

Referring to FIG. 7, the CORESET includes N^{CORESET}_{RB} resource blocks in the frequency domain, and N^{CORESET}_{symb} ∈ {1, 2, 3} number of symbols in the time domain. N^{CORESET}_{RB} and N^{CORESET}_{symb} may be provided by a base station via higher layer signaling. As shown in FIG. 7, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the conventional wireless communication system (e.g., LTE/LTE-A) is configured over the entire system band used by a base station (BS). All the UEs, excluding some (e.g., eMTC/NB-IoT UE) supporting only a narrow band, should be able to receive wireless signals of the entire system band of the BS in order to properly receive/decode control information transmitted by the BS.

On the other hand, in NR, CORESET described above was introduced. CORESETs are radio resources for control information to be received by the UE and may use only a portion, rather than the entirety of the system bandwidth in the frequency domain. In addition, in the time domain, only some of the symbols in the slot may be used. The BS may allocate the CORESET to each UE and may transmit control information through the allocated CORESET. A UE in NR can receive control information of a base station even if it does not necessarily receive the entire system band.

The CORESET may include a UE-specific CORESET for transmitting UE-specific control information and a common CORESET for transmitting control information common to all UEs.

Meanwhile, NR may require high reliability according to applications. In such a situation, a target block error rate (BLER) for downlink control information (DCI) transmitted through a downlink control channel (e.g., physical downlink control channel (PDCCH)) may remarkably decrease compared to those of conventional technologies. As an example of a method for satisfying requirement that requires high reliability, content included in DCI can be reduced and/or the amount of resources used for DCI transmission can be increased. Here, resources can include at least one of resources in the time domain, resources in the frequency domain, resources in the code domain and resources in the spatial domain.

In NR, the following technologies/features can be applied.

### <Self-contained subframe structure>

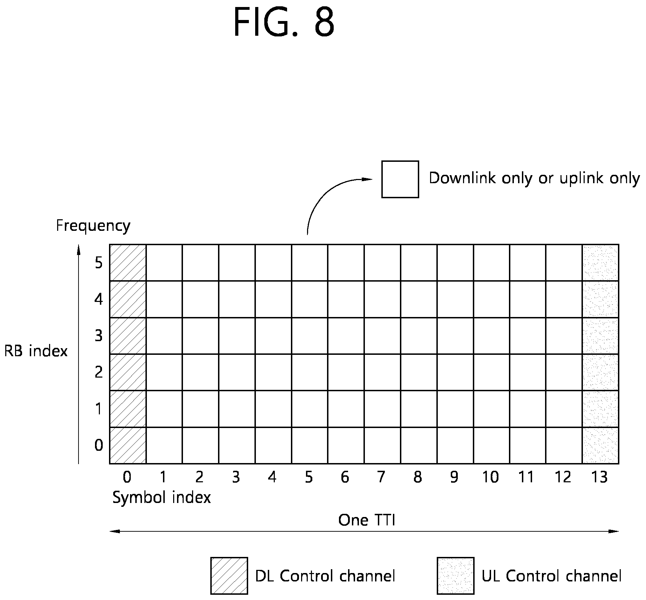

FIG. 8 shows an example of a frame structure for a new radio access technology.

In NR, as shown in FIG. 8, a structure in which a control channel and a data channel are time-division-multiplexed within one TTI can be considered as a frame structure in order to minimize latency.

In FIG. 8, a hatched area indicates a downlink control area, and a black area indicates an uplink control area. The unmarked area may be used for downlink data (DL data) transmission or uplink data (UL data) transmission. A feature of this structure is that downlink (DL) transmission and uplink (UL) transmission are sequentially performed within one subframe and thus DL data can be transmitted and UL ACK/NACK (Acknowledgement/negative-acknowledgement) can be received within the subframe. Consequently, a time required from occurrence of a data transmission error to data retransmission is reduced, thereby minimizing latency in final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

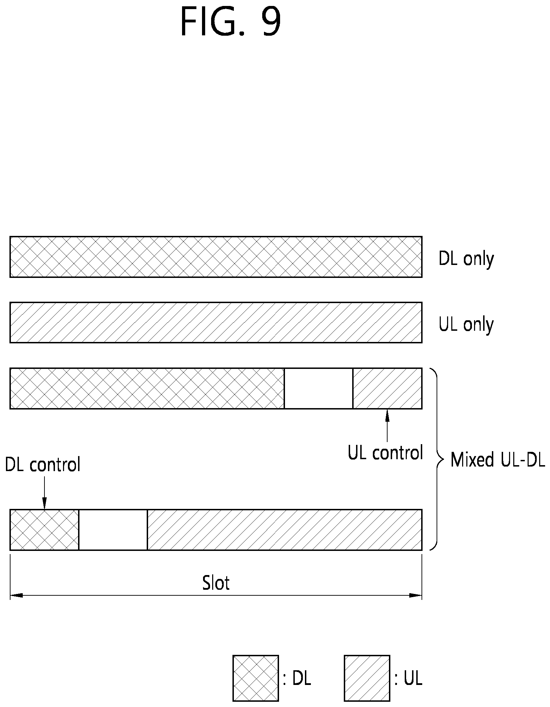

FIG. 9 illustrates a structure of self-contained slot.

In NR system, one slot includes all of a DL control channel, DL or UL data channel, UL control channel, and so on. For example, the first N symbols in a slot may be used for transmitting a DL control channel (in what follows, DL control region), and the last M symbols in the slot may be used for transmitting an UL control channel (in what follows, UL control region). N and M are each an integer of 0 or larger. A resource region located between the DL and UL control regions (in what follows, a data region) may be used for transmission of DL data or UL data. As one example, one slot may correspond to one of the following configurations. Each period is listed in the time order.
1. DL only configuration
2. UL only configuration
3. Mixed UL-DL configuration
   - DL region + GP (Guard Period) + UL control region
   - DL control region + GP + UL region
      a DL region: (i) a DL data region, (ii) DL control region plus DL data region
      a UL region: (i) an UL data region, (ii) UL data region plus UL control region.

In the DL control region, a PDCCH may be transmitted, and in the DL data region, a PDSCH may be transmitted. In the UL control region, a PUCCH may be transmitted, and in the UL data region, a PUSCH may be transmitted. In the PDCCH, Downlink Control Information (DCI), for example, DL data scheduling information or UL data scheduling information may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming), an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting method. At this time, analog beams belonging to different antenna panels within one symbol can be transmitted simultaneously, and a method of introducing a beam reference signal (BRS), which is a reference signal (RS) to which a single analog beam (corresponding to a specific antenna panel) is applied and transmitted to measure channels for each analog beam, is being discussed. The BRS may be defined for a plurality of antenna ports, and each antenna port of the BRS may correspond to a single analog beam. At this time, unlike the BRS, all analog beams in an analog beam group may be applied and transmitted so that a synchronization signal or xPBCH can be well received by any UE.

In the NR, in a time domain, a synchronization signal block (SSB, or also referred to as a synchronization signal and physical broadcast channel (SS/PBCH) block) may consist of 4 OFDM symbols indexed from 0 to 3 in an ascending order within a synchronization signal block, and a primary synchronization signal (PSS), secondary synchronization signal (SSS), and a PBCH associated with demodulation reference signal (DMRS) may be mapped to the symbols. As described above, the synchronization signal block (SSB) may also be represented by an SS/PBCH block.

In NR, since a plurality of synchronization signal blocks (SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, a beam-based transmission/reception operation may be performed. When the reception performance of the current serving beam is degraded, a process of finding a new beam may be performed through a process called beam failure recovery (BFR).

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have gone through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread' |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDDCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

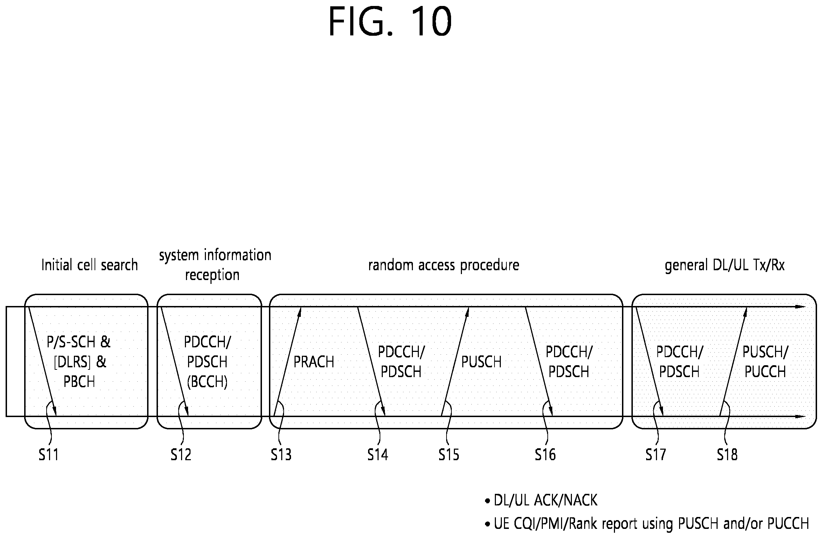

FIG. 10 illustrates physical channels and typical signal transmission.

Referring to FIG. 10, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search may be referred to as a procedure in which a UE obtains time and frequency synchronization with a cell and detects a cell ID of the cell. Cell search may be based on a primary synchronization signal and a secondary synchronization signal of the cell and the PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (This can be referred to as the process of receiving a contention resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. In the following, the proposed method is described based on the new RAT (NR) system for convenience of description, but the range of systems to which the proposed method is applied can be extended to other systems such as 3GPP LTE/LTE-A systems in addition to the NR system.

One potential technology that aims to enable future cellular network deployment scenarios and applications is support for wireless backhaul and relay links. This enables flexible and highly dense deployment of NR cells without the need to proportionally densify the transport network.

With native deployment of massive MIMO or multi-beam systems, greater bandwidth is expected to be available in NR compared to LTE (e.g., mmWave spectrum), so opportunities are created for the development and deployment of integrated access and backhaul links. This is done by establishing a number of control and data channels/procedures defined to provide connectivity or access to UEs and it allows easier deployment of a dense network of self-backhauled NR cells in a more integrated manner. These systems are referred to as integrated access and backhaul links (IAB).

The present disclosure defines the followings.
- AC(x): access link between node (x) and UE(s).
- BH(xy): Backhaul link between node (x) and node (y).

In this case, the node may mean a donor gNB (DgNB) or a relay node (RN). Here, the DgNB or donor node may be a gNB that provides a function of supporting backhaul for IAB nodes.

When relay node 1 and relay node 2 exist, if relay node 1 is connected to relay node 2 through a backhaul link and relays data transmitted to and received from relay node 2, relay node 1 is called the parent node of relay node 2, and relay node 2 is called a child node of relay node 1.

Technical features that are individually described in one drawing in this specification may be implemented individually or simultaneously.

The following drawings are made to explain a specific example of the present specification. Since the names of specific devices or names of specific signals/messages/fields described in the drawings are provided as examples, the technical features of the present specification are not limited to the specific names used in the drawings below.

Below, a network-controlled repeater (NCR) and its operation method in an NR environment are described. Hereinafter, NCR may be simply referred to as a relay or a repeater. Hereinafter, MT may be referred to as NCR-MT, and RU may be referred to as NCR-Fwd (forwarding).

### <Transport network architecture for 5G>

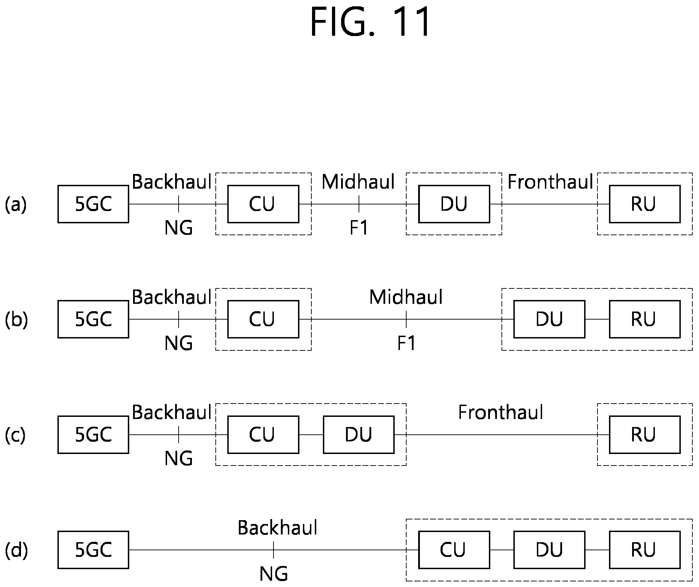

FIG. 11 illustrates transport network architectures for 5G.

ITU-T (Telecommunication Standardization Sector) adopted a transport network architecture for 5G consisting of three logical elements: CU (Centralized Unit), DU (Distributed Unit), and RU (Remote Unit), as shown in (a) of FIG. 11.

In this model, mid and lower layer functions are divided into DU and RU. The RU implements the RF function and possibly also implements the low-PHY and high-PHY functions according to the functional division between the RU and the DU. Depending on network requirements, CU, DU and RU can be grouped in different combinations to form actual physical network elements.

For example, as shown in (b) to (d) of FIG. 11, CU, DU, and RU may be grouped in various combinations. This provides flexibility to accommodate different network architectures, applications and transport network requirements.

As in FIG. 11, a transport network between 5GC and CU is called backhaul. The backhaul network implements the 3GPP NG interface. Similarly, the transmission network between CU and DU is called midhaul. The midhaul network implements the 3GPP F1 interface. Finally, the transport network between the DU and RU is called a fronthaul. Backhaul, midhaul, and fronthaul may be collectively referred to as xhaul.

Reconfgurable intelligent surface (RIS)-known also as intelligent reflecting surface (IRS), and large intelligent surface (LIS)-is a programmable structure that can be used to control the propagation of electromagnetic (EM) waves by changing the electric and magnetic properties of the surface.

RISs can be used to sense the radio environment by integrating sensing capabilities into them. By placing intelligent surfaces in the environment where wireless systems are operating, the properties of the radio channels can be controlled at least partially.

Unique capability of RIS may enable a number of benefits, including the potential for enhancing reliability and coverage performance through beamforming or range extension. The ability to control the propagation environment has somewhat changed the conventional wireless system design paradigm, where the radio channel was always seen for the most part as an uncontrollable entity that distorts the transmitted signals. Traditionally the transmitter (TX) and the receiver (RX) were designed to equalize the impact of the channel. Envisioned scenarios vary from cases where a single RIS is placed on a wall to direct signals coming from a predetermined direction.

By using RIS, it is possible to provide the 'transmission effect' of the base station signal through which external signals are transmitted into the building, and to provide the 'reflection effect' of the NLoS (non-line-of-sight) environment, thereby it can improve coverage for shaded areas.

### <Network-controlled repeater in NR>

### (1) Conventional RF repeater

A (conventional) RF repeater is a non-regenerative type of relay node that simply amplifies and forwards everything it receives. The main advantages of RF repeaters are low cost, ease of deployment and no increase in latency. The main drawback is that it can amplify the signal and noise, contributing to increased interference (contamination) of the system.

### (2) Rel-17 WI on RF repeater (RAN4)

RF repeaters are specified in Rel-17 of RAN4 for the FR1 band FDD/TDD and FR2 bands. The Rel-17 Work Item Description (WID) contains only RF requirements. Among the RAN4 WIDs, there is one that is specified as "assuming that the relay does not perform adaptive beamforming toward the UE".

### (3) Rel-18 Network controlled repeater for NR

Coverage is a fundamental aspect of cellular network deployment. Mobile operators rely on various types of network nodes to provide comprehensive coverage. Deploying regular full-stack cells is an option, but may not always be possible (e.g., if there is no backhaul availability) and may not be economically viable.

As a result, a new type of network node has been considered to increase the flexibility of mobile operators' network deployment. For example, Integrated Access and Backhaul (IAB) is a new type of network node that does not require wired backhaul, introduced in Rel-16 and improved in Rel-17. Another type of network node is an RF repeater that simply amplifies and forwards any signals it receives. RF repeaters have been widely deployed in 2G, 3G and 4G to supplement the coverage provided by regular full-stack cells.

RF repeaters provide a cost-effective means of extending network coverage, but have limitations. RF repeaters simply perform amplification and transmission tasks without considering various factors that can improve performance. The factors may include information on semi-static and/or dynamic downlink/uplink configuration, adaptive transmitter/receiver spatial beamforming, ON-OFF states, and the like.

In the network-controlled repeater (NCR), the function of receiving and processing side control information from the network is improved over the existing RF repeater. Side control information allows network controlled repeaters to perform amplification and forwarding tasks in a more efficient manner. Potential benefits may include mitigation of unwanted noise amplification, better spatial orientation transmission and reception, and simplified network integration.

Research on NCR can focus on the following scenarios and assumptions.

NCR is in-band RF repeater used to extend network coverage in the FR1 and FR2 bands, and FR2 deployments can be prioritized for both outdoor and O2I scenarios.

The NCR may be transparent to the UE.

The NCR can simultaneously maintain a base station-repeater link and a repeater-UE link.

Cost effectiveness is a key consideration for NCRs.

It is necessary to study and identify the side control information below.

Beamforming information, timing information for aligning transmission and reception boundaries of network control repeaters, UL-DL TDD configuration information, ON-OFF information for efficient interference management and energy efficiency improvement, power control information for efficient interference management, etc.

Research and identification of the L1/L2 signals (including their configurations) to convey side control information may be required. In terms of management of NCRs, it is necessary to study the identification and authentication of NCRs.

NCR may be considered to be composed of RU and MT.

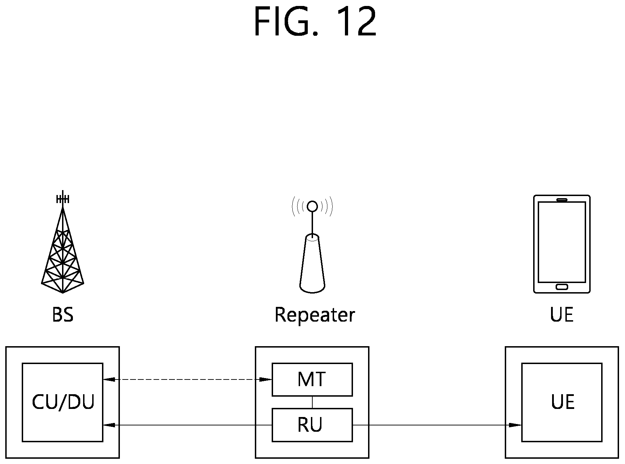

FIG. 12 shows an example of a topology in which an NCR performs transmission and reception between a base station and a UE.

Referring to FIG. 12, a CU and/or DU may exist in a base station, and an NCR may be connected to the base station. NCR may consist of MT and RU.

The RU may be composed of only the RF layer. The RU may receive a signal transmitted by the base station at the RF end and forward it to the UE, and may receive a signal transmitted by the UE at the RF end and forward the signal to the base station.

The RU only relays a signal between the base station and the UE, and cannot generate and transmit a signal/channel by itself to the base station/UE or receive and detect a signal/channel from the base station/UE.

In order to forward the received signal, the RU may consider adjusting the transmission/reception beam direction, DL/UL direction, ON/OFF status, transmission (Tx) power, etc. at the RF end. However, the operation of this RU cannot be determined by the NCR itself and can be completely controlled by the base station.

An MT may include an RF layer and L1, L2, and/or L3 layers. For example, the MT may be composed of only the RF layer and the L1 layer or the L1/L2 layer. Alternatively, the MT may be composed of an RF layer and L1/L2/L3 layers.

The MT may detect/receive a signal/channel transmitted by the base station, and the MT may generate and transmit a signal/channel transmitted to the base station. In addition, the MT may receive information (i.e., side control information) necessary for controlling the operation of the RU from the base station. The MT does not transmit/receive with the UE.

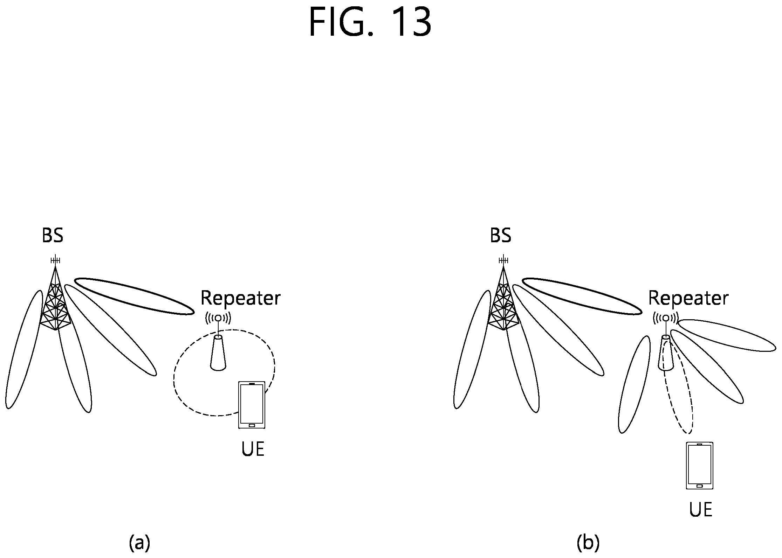

FIG. 13 is a diagram comparing operations of an NCR and an existing RF repeater.

Referring to (a) of FIG. 13, in the case of an existing RF repeater, beamforming is performed in an onmi-direction or a fixed direction. On the other hand, in the NCR, a beamforming gain can be obtained by adaptively adjusting the Tx/Rx beam direction of the NCR according to the location of the UE and the channel condition of the UE as shown in (b) of FIG. 13.

In the case of existing RF repeaters, transmission and reception in DL and UL directions were always performed simultaneously because it could not distinguish between DL and UL directions in the TDD system. Alternatively, switching between the DL direction and the UL direction is performed in a predetermined time pattern by applying only a fixed TDD configuration. On the other hand, in the NCR, the NCR may perform DL/UL switching in consideration of TDD configuration. Through this, adaptive DL/UL operation is possible, and power waste and interference caused by forwarding unnecessary signals can be reduced.

In the case of an existing RF repeater, the power of a received signal is always amplified and transmitted regardless of whether a base station or a UE transmits a signal. This wastes power unnecessarily and increases interference to surroundings. In the case of NCR, unnecessary signals may not be transmitted by performing an ON/OFF operation and turning off the operation of the RU when there is no signal to be transmitted to the base station/UE.

In the case of the existing RF repeater, the power of the received signal is amplified at a fixed ratio and transmitted. In the case of NCR, when a signal is transmitted with unnecessarily large power, the effect of interference on the surroundings is reduced by reducing the transmission power of the NCR, and when a signal is transmitted with low power, the signal can be stably transmitted to the receiver by increasing the transmission power of the NCR.

In the case of the existing RF repeater, it operated without knowing the DL/UL slot boundary. On the other hand, in the case of NCR, in order to adaptively adjust beamforming, ON/OFF, DL/UL direction, Tx power, etc. as described above, the NCR needs to know the transmission/reception boundary of DL and UL. Through this, the operation of the RU may be differently applied for each unit time (e.g., slot/symbol).

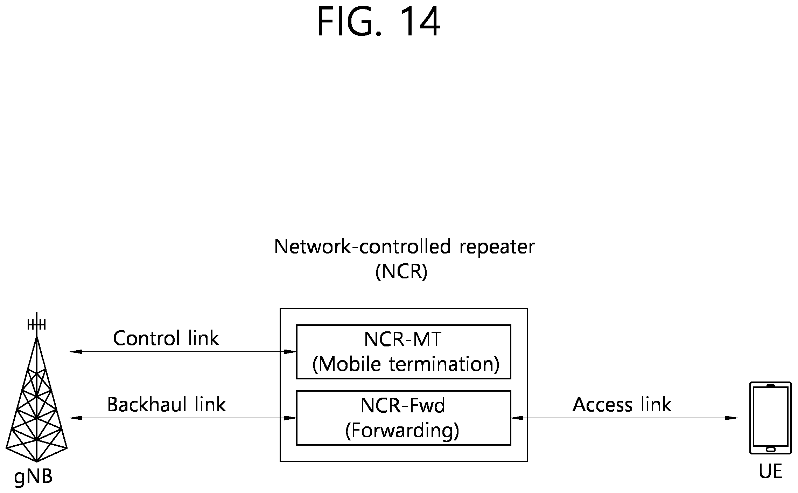

FIG. 14 illustrates a link between a base station, an NCR, and a UE.

Referring to FIG. 14, NCR may include NCR-MT(=MT) and NCR-Fwd(=RU).

An NCR-MT may be defined as a functional entity that communicates with a base station (gNB) via a control link (C-link) to enable information exchange (e.g., side control information). C-Link may be based on the NR Uu interface.

Side control information may be at least information for NCR-Fwd control.

NCR-Fwd may be defined as a functional entity that amplifies and transfers UL/DL RF signals between a base station and a UE through a backhaul link and an access link. The operation of NCR-Fwd is controlled according to the side control information received from the base station.

The contents of the present disclosure are described assuming an operation in NCR. However, the contents of the present disclosure may also be applied to non-NCR devices. For example, the contents of the present disclosure may be applied to the operation of RIS. To this end, the NCR mentioned in this disclosure may be replaced with RIS and expanded/interpreted. In this case, the RU plays a role in forwarding signals from the base station to the UE and forwarding signals from the UE to the base station in the RIS, and the MT may serve to receive side control information for controlling signal transmission of the RU from the base station.

Hereinafter, the term network may be interpreted as being replaced with base station or CU/DU. In addition, the term base station may be interpreted as being replaced with network, CU, or DU.

In the NCR, in order to forward the signal received by the RU, it may be considered that the RF end adjusts the transmission/reception beam direction, DL/UL direction, ON/OFF status, transmission power, and the like. However, the operation of this RU cannot be determined by the NCR itself and can be completely controlled by the base station. To this end, the MT may receive information (i.e., side control information) necessary for controlling the operation of the RU from the base station. At least some or all of this side control information may be conveyed via L1/L2 signaling such as DCI (e.g., DCI format 2_8), MAC-CE.

The side control information may include, for example, all or part of the following information.
1) Beamforming information. This may mean information about the Tx/Rx beam direction of the RU. This information may include beam directions for UL Tx to the base station, DL Rx from the base station, DL Tx to the UE, and/or UL Rx from the UE.
2) Timing information to align transmission/reception boundaries of network-controlled repeater. This may mean information for the RU to align the Tx/Rx slot or symbol boundary.
3) Information on UL-DL TDD configuration. This may mean information on the DL/UL direction of the RU.
4) ON-OFF information for efficient interference management and improved energy efficiency. This may mean information about the ON-OFF operation of the RU.
5) Power control information for efficient interference management. This may mean information on transmission power of the RU. This information may include UL transmission power to the base station and/or DL transmission power to the UE.

Side control information may be applied differently for each time resource. In this case, it is necessary to indicate side control information for each time resource.

When side control information is assumed to be transmitted through MAC-CE and/or DCI, side control information may be transmitted through different MAC-CEs and/or DCIs for each time resource unit. In this case, there is a burden of transmitting side control information for each time resource unit. Considering this, when side control information is transmitted once, side control information for a plurality of time resource units may be indicated.

Below, it is described the operation of reporting information about an access link beam that NCR prefers or does not prefer to the network, considering its own situation/environment, when operating NCR in an NR environment.

In the case of NCR-Fwd, forwarding operation can be performed by adapting the DL-Tx/UL-Rx beam direction in the access link according to the instruction of the base station. That is, the DL-Tx/UL-Rx beam direction in the access link can be adjusted according to the time resource.

In addition, for NCR-MT and NCR-Fwd, transmission and reception operations can be performed by adapting the DL-Rx/UL-Tx beam directions in the control link (C-link)/backhaul link. That is, the DL-Rx/UL-Tx beam directions in the control link/backhaul link can be adjusted according to time resources.

Since the access link, backhaul link, and control link of NCR all exist within a single device, the Tx and Rx signals of NCR in the access link, backhaul link, and control link may interfere with each other.

In particular, the DL Tx signal in the access link of the NCR may interfere with the UL-Rx in the control link of the NCR.

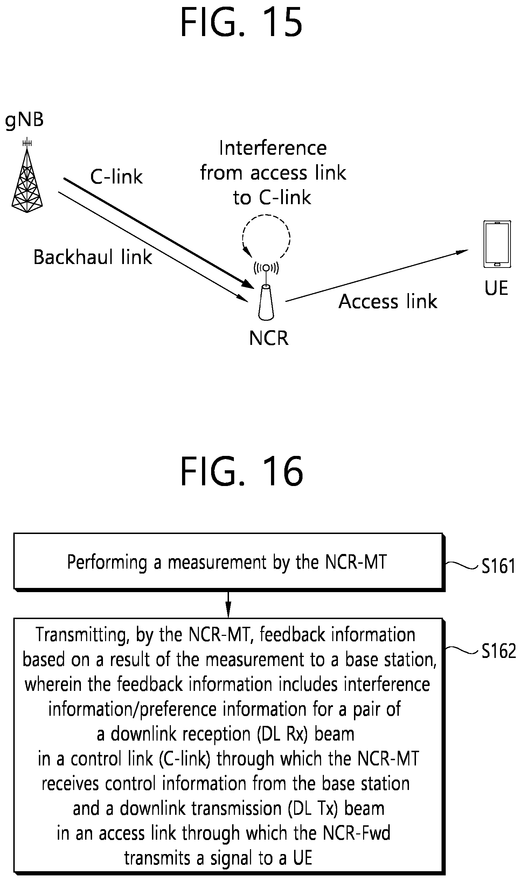

FIG. 15 shows an example where an access link transmission signal of NCR interferes with the control link and backhaul link.

Referring to FIG. 15, the NCR-MT can receive a downlink signal (e.g., control information) from a base station using a downlink reception beam (DL Rx beam) in the control link. NCR-Fwd can receive downlink signals (e.g., data to be transmitted to a UE) from a base station on a backhaul link. NCR-Fwd can transmit (forward) downlink signals (data) to a UE using a downlink transmission beam (DL Tx beam) in the access link.

In this process, when NCR-MT receives a DL signal (control information) from the base station, the DL transmission signal forwarded by NCR-Fwd to the access link may cause interference.

In order for the NCR to perform DL forwarding operations on the access link and still correctly receive DL signals from the base station over the control link, it is necessary to minimise the impact of this interference.

Depending on the beam direction (/beam, hereinafter beam direction may mean beam) in which NCR-Fwd performs DL-Tx (downlink transmission) in the access link, the interference impact on NCR-MT performing DL-Rx operation in the control link using the DL-Rx (downlink reception) beam may differ.

Additionally, depending on the beam direction along which NCR-MT performs DL-Rx in the control link, the interference impact of the DL-Tx signal transmitted by NCR-Fwd in the access link on the DL-Rx signal in the control link of NCR-MT may differ. In other words, the interference impact of DL-Tx signals in the access link of the NCR-Fwd on DL-Rx signals in the control link of the NCR-MT may vary depending on the DL-Tx beam direction/beam in the access link and the DL-Rx beam direction/beam in the control link.

The NCR-MT knows when the NCR-Fwd is performing DL-Tx in the access link and in what beam direction. Therefore, NCR-MT can measure the interference impact on its DL-Rx. Based on this, NCR-MT can determine the following information.
i) For each DL-Tx beam direction of the NCR-Fwd in the access link, the interference value of the the DL-Tx beam signal in the access link to the DL-Rx in the control link.
ii) Interference value of DL-Tx beam signal in access link to DL-Rx in control link according to DL-Rx beam direction in control link.
iii) Interference value of DL-Tx beam signal in access link to DL-Rx in control link according to DL-Tx beam direction in access link and DL-Rx beam direction in control link.

Based on this determination, NCR-MT may report all or part of the following information to the base station.
1) Reporting on interference levels.
   i) Interference value of DL-Tx beam signal in access link to DL-Rx in control link according to DL-Tx beam direction in access link.

These reports may only be performed if each interference value is above/less than or equal to/below a certain threshold.

And/or such reporting may be performed only for a specific plurality of DL-Tx beam directions (e.g., M, where M may be a natural number greater than or equal to 2) in ascending or descending order of interference values.

And/or such reporting may be performed only within specific multiple DL-Tx beam directions configured by the network.

ii) Interference value of DL-Tx beam signal in access link to DL-Rx according to DL-Rx beam direction in control link. These reports may only be performed if each interference value is above/less than or equal to/below a certain threshold.

And/or such reporting may be performed only for a specific plurality (e.g., M, where M may be a natural number greater than or equal to 2) of DL-Rx beam directions in ascending or descending order of interference values.

And/or such reporting may be performed only within specific multiple DL-Rx beam directions configured by the network.

iii) Interference value of DL-Tx beam signal in access link to DL-Rx according to DL-Tx beam direction in access link and DL-Rx beam direction in control link.

These reports may only be performed if each interference value is above/less than or equal to/below a certain threshold.

And/or such reporting may be performed only for a specific plurality (e.g., M) of DL-Rx beam directions in ascending or descending order of interference values.

And/or such reporting may be performed only within specific multiple DL-Rx beam directions configured by the network.

2) Reporting on preferred or not-preferred beams.
i) Information about the DL-Tx beam direction in the access link preferred and/or non-preferred by NCR-MT or the set of 'DL-Tx beam directions in the access link'. This reporting may only be performed for specific multiple DL-Tx beam directions configured by the network.
ii) Information about the DL-Rx beam direction in the control link preferred and/or non-preferred by NCR-MT or the set of 'DL-Rx beam directions in the control link'. This reporting may only be performed for specific multiple DL-Rx beam directions configured by the network.
iii) Information about the DL-Tx beam direction in the access link preferred and/or non-preferred by NCR-MT or the set of 'DL-Tx beam directions in the access link' for each DL-Rx beam direction in the control link. This reporting may only be performed for specific multiple DL-Tx beam directions configured by the network.
iv) Information about the DL-Tx beam direction in the access link preferred and/or non-preferred by NCR-MT or the set of 'DL-Tx beam directions in the access link' for each DL-Rx beam direction in the access link. This reporting may only be performed for specific multiple DL-Rx beam directions configured by the network.
v) Information on pair(s) of 'DL-Rx beam direction in control link' and 'DL-Tx beam direction in access link' preferred and/or non-preferred by NCR-MT. This reporting may only be performed for specific multiple DL-Tx beam directions configured by the network. And/or such reporting may be performed only for specific multiple DL-Rx beam directions configured by the network.

Such reporting may be performed via signaling such as RRC/MAC-CE. Additionally, these reports may be performed on a periodic or aperiodic basis. Additionally, these reports may be reported only when there is a base station request, and/or may be performed without a base station request based on certain criteria.

FIG. 16 illustrates an operation method of an NCR including a network-controlled repeater (NCR)-MT (mobile termination) and NCR-Fwd (forward) in a wireless communication system.

Referring to FIG. 16, the NCR-MT of NCR performs measurement (S161).

The above measurement may be, for example, measuring an interference value of the DL-Tx beam signal in the access link on the DL-Rx operation in the control link, for each DL-Tx beam (/beam direction) of the NCR-Fwd in the access link and each DL-Rx beam (/beam direction) of the NCR-MT in the control link.

The NCR-MT of the NCR transmits feedback information based on a result of the measurement to a base station. Here, the feedback information includes interference information for a pair of a downlink reception (DL Rx) beam in a control link (C-link) through which the NCR-MT receives control information from the base station and a downlink transmission (DL Tx) beam in an access link through which the NCR-Fwd transmits a signal to a user equipment (UE) (S162). That is, the feedback information includes at least one of the interference information and the preference information.

In some embodiments, the interference information may include an interference value of the downlink transmission beam in the access link on the downlink reception beam in the control link. At this time, the interference value may be greater than the threshold. That is, only when the measured interference value is greater than the threshold may it be reported to the base station through the above feedback information.

When a beam pair comprises a DL Rx beam among a plurality of DL Rx beams on a C-link from which the NCR-MT receives control information from the base station and a DL Tx beam among a plurality of DL Tx beams on an access link from which the NCR-Fwd transmits signals to the UE, the feedback information may comprises interference information for a plurality of beam pairs.

Here, the plurality of beam pairs may include M (M is a natural number greater than or equal to 2) DL Rx beams in descending order of measured interference values among the plurality of DL Rx beams.

In this case, the plurality of beam pairs may include M (M is a natural number greater than or equal to 2) DL Rx beams preconfigured by the base station among the plurality of DL Rx beams.

The feedback information may include preference information for a pair of a DL Rx beam preferred by the NCR-MT among DL Rx beams in the C-link through which the NCR-MT receives control information from the base station and a DL Tx beam preferred by the NCR-MT among DL Tx beams in the access link through which the NCR-Fwd transmits a signal to a UE. For example, when the NCR-Fwd uses a N-th DL Tx beam in the access link and the NCR-MT uses a M-th DL Rx beam in the control link and the interference of the N-th DL Tx beam to the M-th DL Rx beam is the smallest, information about the pair of the N-th DL Tx beam and the M-th DL Rx beam may be fed back as the preferred information.

In some embodiments, the NCR may further include receiving a message requesting the feedback information from the base station.

Based on the feedback information, the base station can control not to use a downlink transmission beam of an access link that has a significant interference effect on the NCR-MT. Alternatively, the downlink transmission beam of the access link that has the least interference impact on the NCR-MT can be controlled to be used. At this time, the base station (network) can consider both the downlink reception beam of the control link and the downlink transmission beam of the access link, and control both the downlink reception beam of the control link and the downlink transmission beam of the access link. This is because each downlink reception beam in the control link can have a different amount of interference from each downlink transmission beam in the access link. Through this, downlink reception performance degradation in the control link of NCR-MT can be prevented.

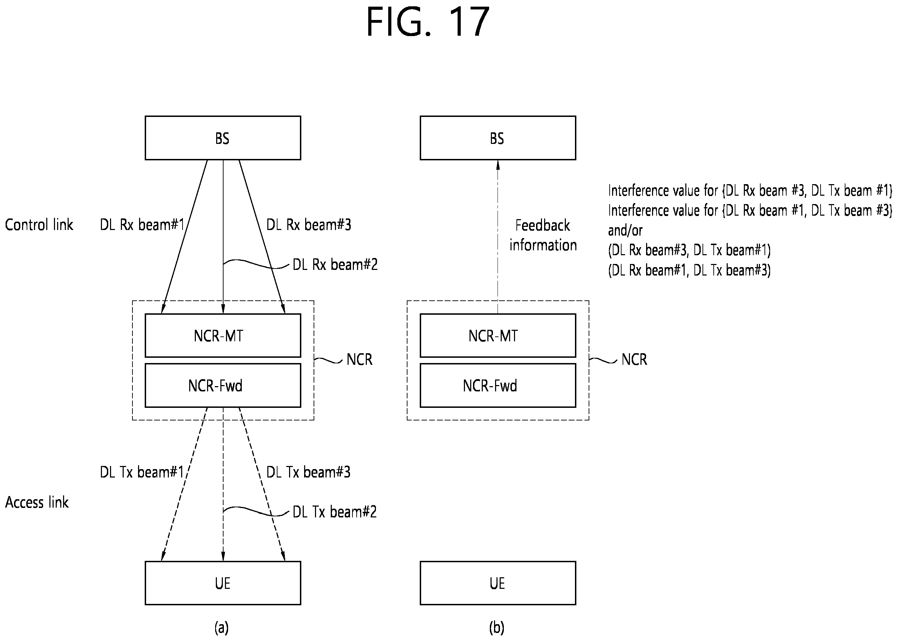

FIG. 17 is an example of applying the method of FIG. 16.

Referring to (a) of FIG. 17, an NCR including NCR-MT and NCR-Fwd may receive a downlink signal (e.g., control information related to the forwarding operation of NCR-Fwd) from a base station using downlink reception (DL Rx) beams #1, 2, and 3 in the control link.

NCR can forward a downlink signal (e.g., data/control information for the UE) to the UE using downlink transmission (DL Tx) beams #1, 2, and 3 in the access link.

In this case, the NCR can measure the interference of the downlink transmission (DL Tx) beams #1, 2, and 3 on the downlink reception (DL Rx) beams #1, 2, and 3, respectively. That is, the amount of interference (interference value) of the downlink transmission beam on the downlink reception beam can be measured for a total of 9 pairs of {downlink reception beam, downlink transmission beam}.

Referring to (b) of FIG. 17, NCR (NCR-MT) transmits feedback information based on the above measurement to the base station. For example, if feedback is provided only for the two pairs with the largest interference values, the interference value for {downlink reception beam #3, downlink transmission beam #1} and the interference value for {downlink reception beam #1, downlink transmission beam #3} may be fed back. Alternatively, if the feedback information includes the aforementioned preference information, information indicating {downlink reception beam #3, downlink transmission beam #1}, {downlink reception beam #1, downlink transmission beam #3} may be fed back.

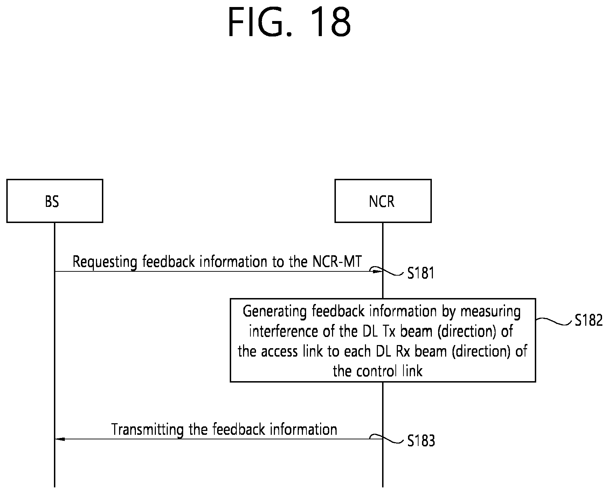

FIG. 18 illustrates signaling between a base station and a UE and operation of the base station when applying the method of FIG. 16.

Referring to FIG. 18, the base station transmits a message requesting feedback information to the NCR-MT of the NCR including NCR-MT and NCR-Fwd (S181).

The UE measures interference of the downlink transmission beam (direction) of the access link to each downlink reception beam (direction) of the control link and generates feedback information (S182).

The base station receives the above feedback information from the NCR-MT (S183). The NCR transmits the feedback information to the base station.

As described above, the feedback information includes at least one of interference information and preference information for a pair of a downlink reception (DL Rx) beam in a control link (C-link) through which the NCR-MT receives control information from the base station and a downlink transmission (DL Tx) beam in an access link through which the NCR-Fwd transmits a signal to the UE.

Based on the above feedback information, the base station can control not to use a downlink transmission beam of an access link that has a significant interference effect on the NCR-MT. Alternatively, the downlink transmission beam of the access link that has the least interference impact on the NCR-MT can be controlled to be used. At this time, the base station (network) can consider both the downlink reception beam of the control link and the downlink transmission beam of the access link, and control both the downlink reception beam of the control link and the downlink transmission beam of the access link. Through this, downlink reception performance degradation in the control link of NCR-MT can be prevented.

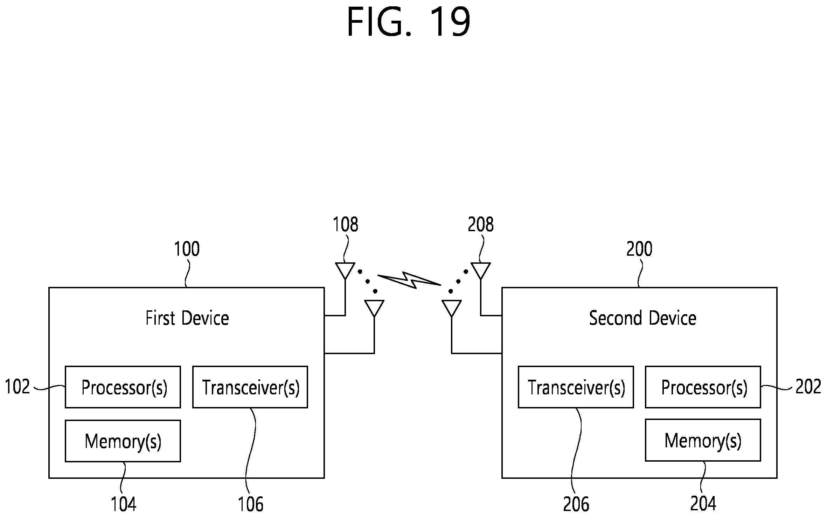

FIG. 19 illustrates a wireless device applicable to this specification.

Referring to FIG. 19, the first wireless device 100 and the second wireless device 200 may transmit/receive wireless signals through various wireless access technologies (e.g., LTE, NR).

The first wireless device 100 includes at least one processor 102 and at least one memory 104 and may further include at least one transceiver 106 and/or at least one antenna 108. The processor 102 may be configured to control the memory 104 and/or the transceiver 106 and to implement the descriptions, functions, procedures, proposals, methods, and/or operational flowcharts disclosed herein. For example, the processor 102 may process information in the memory 104 to generate first information/signal and may then transmit a radio signal including the first information/signal through the transceiver 106. In addition, the processor 102 may receive a radio signal including second information/signal through the transceiver 106 and may store information obtained from signal processing of the second information/signal in the memory 104. The memory 104 may be connected to the processor 102 and may store various pieces of information related to the operation of the processor 102. For example, the memory 104 may store a software code including instructions to perform some or all of processes controlled by the processor 102 or to perform the descriptions, functions, procedures, proposals, methods, and/or operational flowcharts disclosed herein. Here, the processor 102 and the memory 104 may be part of a communication modem/circuit/chip designed to implement a radio communication technology (e.g., LTE or NR). The transceiver 106 may be connected with the processor 102 and may transmit and/or receive a radio signal via the at least one antennas 108. The transceiver 106 may include a transmitter and/or a receiver. The transceiver 106 may be replaced with a radio frequency (RF) unit. In this specification, the wireless device may refer to a communication modem/circuit/chip.

The processor 102 may be included in an NCR including a network-controlled repeater (NCR)-mobile termination (MT) and an NCR-Forwarding (Fwd). The processor 102 controls the NCR-MT to perform measurement and transmit feedback information based on the result of the measurement to the base station. The feedback information includes interference information for a pair of a downlink reception (DL Rx) beam in a control link (C-link) through which the NCR-MT receives control information from the base station and a downlink transmission (DL Tx) beam in an access link through which the NCR-Fwd transmits a signal to a user equipment (UE).

The second wireless device 200 includes at least one processor 202 and at least one memory 204 and may further include at least one transceiver 206 and/or at least one antenna 208. The processor 202 may be configured to control the memory 204 and/or the transceiver 206 and to implement the descriptions, functions, procedures, proposals, methods, and/or operational flowcharts disclosed herein. For example, the processor 202 may process information in the memory 204 to generate third information/signal and may then transmit a radio signal including the third information/signal through the transceiver 206. In addition, the processor 202 may receive a radio signal including fourth information/signal through the transceiver 206 and may store information obtained from signal processing of the fourth information/signal in the memory 204. The memory 204 may be connected to the processor 202 and may store various pieces of information related to the operation of the processor 202. For example, the memory 204 may store a software code including instructions to perform some or all of processes controlled by the processor 202 or to perform the descriptions, functions, procedures, proposals, methods, and/or operational flowcharts disclosed herein. Here, the processor 202 and the memory 204 may be part of a communication modem/circuit/chip designed to implement a radio communication technology (e.g., LTE or NR). The transceiver 206 may be connected with the processor 202 and may transmit and/or receive a radio signal via the at least one antennas 208. The transceiver 206 may include a transmitter and/or a receiver. The transceiver 206 may be replaced with an RF unit. In this specification, the wireless device may refer to a communication modem/circuit/chip.

Processor 202 may be included in a base station. The processor 202 transmits a message requesting feedback information to a network-controlled repeater (NCR)-MT (mobile termination) of an NCR including the NCR-MT and an NCR-forward (Fwd), and receives the feedback information from the NCR-MT. The feedback information includes interference information for a pair of a downlink reception (DL Rx) beam in a control link (C-link) through which the NCR-MT receives control information from the base station and a downlink transmission (DL Tx) beam in an access link through which the NCR-Fwd transmits a signal to a user equipment (UE).

Hereinafter, hardware elements of the wireless devices 100 and 200 are described in detail. At least one protocol layer may be implemented, but limited to, by the at least one processor 102 and 202. For example, the at least one processor 102 and 202 may implement at least one layer (e.g., a functional layer, such as PHY, MAC, RLC, PDCP, RRC, and SDAP layers). The at least one processor 102 and 202 may generate at least one protocol data unit (PDU) and/or at least one service data unit (SDU) according to the descriptions, functions, procedures, proposals, methods, and/or operational flowcharts disclosed herein. The at least one processor 102 and 202 may generate a message, control information, data, or information according to the descriptions, functions, procedures, proposals, methods, and/or operational flowcharts disclosed herein. The at least one processor 102 and 202 may generate a signal (e.g., a baseband signal) including a PDU, an SDU, a message, control information, data, or information according to the functions, procedures, proposals, and/or methods disclosed herein and may provide the signal to the at least one transceiver 106 and 206. The at least one processor 102 and 202 may receive a signal (e.g., a baseband signal) from the at least one transceiver 106 and 206 and may obtain a PDU, an SDU, a message, control information, data, or information according to the descriptions, functions, procedures, proposals, methods, and/or operational flowcharts disclosed herein.

The at least one processor 102 and 202 may be referred to as a controller, a microcontroller, a microprocessor, or a microcomputer. The at least one processor 102 and 202 may be implemented by hardware, firmware, software, or a combination thereof. For example, at least one application-specific integrated circuit (ASIC), at least one digital signal processor (DSP), at least one digital signal processing devices (DSPD), at least one programmable logic devices (PLD), or at least one field programmable gate array (FPGA) may be included in the at least one processor 102 and 202. The one or more processors 102 and 202 may be implemented as at least one computer readable medium (CRM) including instructions based on being executed by the at least one processor.

The descriptions, functions, procedures, proposals, methods, and/or operational flowcharts disclosed herein may be implemented using firmware or software, and the firmware or software may be configured to include modules, procedures, functions, and the like. The firmware or software configured to perform the descriptions, functions, procedures, proposals, methods, and/or operational flowcharts disclosed herein may be included in the at least one processor 102 and 202 or may be stored in the at least one memory 104 and 204 and may be executed by the at least one processor 102 and 202. The descriptions, functions, procedures, proposals, methods, and/or operational flowcharts disclosed herein may be implemented in the form of a code, an instruction, and/or a set of instructions using firmware or software.

The at least one memory 104 and 204 may be connected to the at least one processor 102 and 202 and may store various forms of data, signals, messages, information, programs, codes, indications, and/or commands. The at least one memory 104 and 204 may be configured as a ROM, a RAM, an EPROM, a flash memory, a hard drive, a register, a cache memory, a computer-readable storage medium, and/or a combinations thereof. The at least one memory 104 and 204 may be disposed inside and/or outside the at least one processor 102 and 202. In addition, the at least one memory 104 and 204 may be connected to the at least one processor 102 and 202 through various techniques, such as a wired or wireless connection.

The at least one transceiver 106 and 206 may transmit user data, control information, a radio signal/channel, or the like mentioned in the methods and/or operational flowcharts disclosed herein to at least different device. The at least one transceiver 106 and 206 may receive user data, control information, a radio signal/channel, or the like mentioned in the descriptions, functions, procedures, proposals, methods, and/or operational flowcharts disclosed herein from at least one different device. For example, the at least one transceiver 106 and 206 may be connected to the at least one processor 102 and 202 and may transmit and receive a radio signal. For example, the at least one processor 102 and 202 may control the at least one transceiver 106 and 206 to transmit user data, control information, or a radio signal to at least one different device. In addition, the at least one processor 102 and 202 may control the at least one transceiver 106 and 206 to receive user data, control information, or a radio signal from at least one different device. The at least one transceiver 106 and 206 may be connected to the at least one antenna 108 and 208 and may be configured to transmit or receive user data, control information, a radio signal/channel, or the like mentioned in the descriptions, functions, procedures, proposals, methods, and/or operational flowcharts disclosed herein through the at least one antenna 108 and 208. In this document, the at least one antenna may be a plurality of physical antennas or may be a plurality of logical antennas (e.g., antenna ports). The at least one transceiver 106 and 206 may convert a received radio signal/channel from an RF band signal into a baseband signal in order to process received user data, control information, a radio signal/channel, or the like using the at least one processor 102 and 202. The at least one transceiver 106 and 206 may convert user data, control information, a radio signal/channel, or the like, processed using the at least one processor 102 and 202, from a baseband signal to an RF bad signal. To this end, the at least one transceiver 106 and 206 may include an (analog) oscillator and/or a filter.

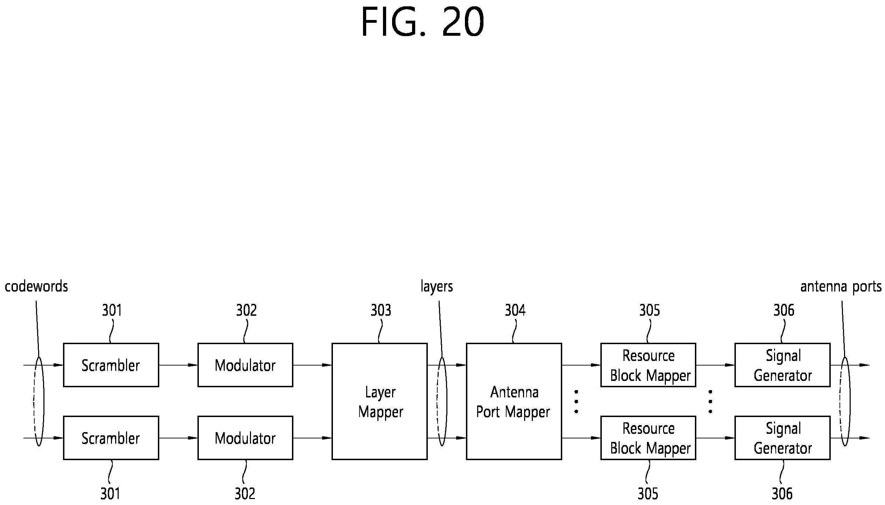

FIG. 20 shows an example of a structure of a signal processing module. Herein, signal processing may be performed in the processors 102 and 202 of FIG. 19.

Referring to FIG. 20, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

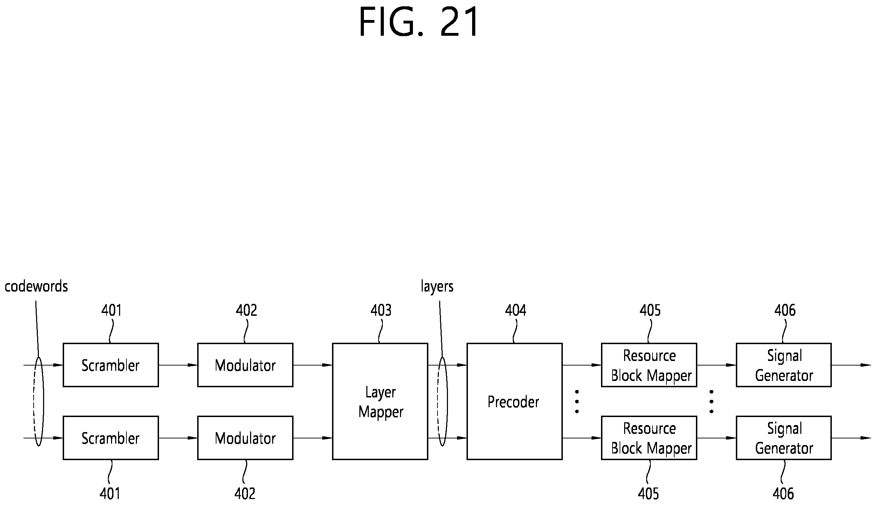

FIG. 21 shows another example of a structure of a signal processing module in a transmitting device. Herein, signal processing may be performed in a processor of a UE/BS, such as the processors 102 and 202 of FIG. 19.

Referring to FIG. 21, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

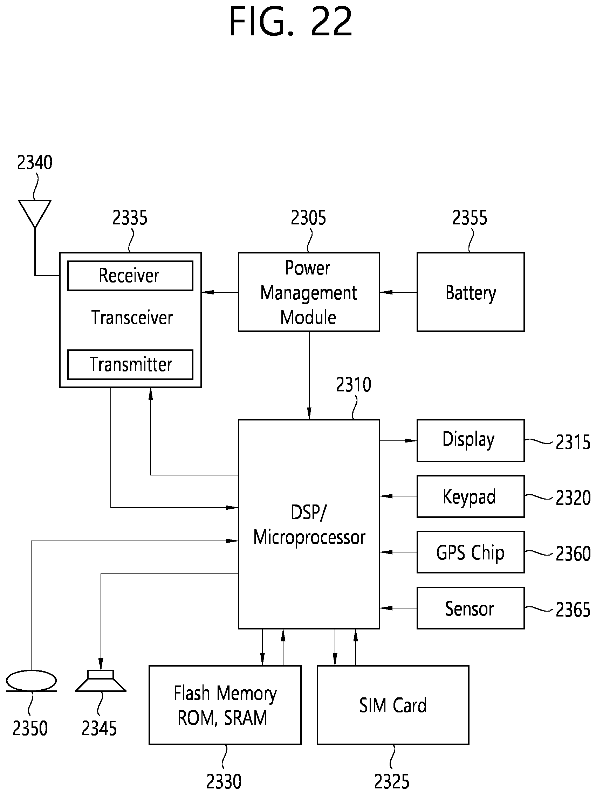

FIG. 22 illustrates an example of a wireless communication device according to an implementation example of the present disclosure.

Referring to FIG. 22, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 22 may be the processors 102 and 202 in FIG. 19.

The memory 2330 is connected to the processor 2310 and stores information related to operations of the processor. The memory may be located inside or outside the processor and connected to the processor through various techniques such as wired connection and wireless connection. The memory 2330 in FIG. 22 may be the memories 104 and 204 in FIG. 19.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 33 may be the transceivers 106 and 206 in FIG. 30.

Although not shown in FIG. 22, various components such as a camera and a universal serial bus (USB) port may be additionally included in the UE. For example, the camera may be connected to the processor 2310.

FIG. 22 is an example of implementation with respect to the UE and implementation examples of the present disclosure are not limited thereto. The UE need not essentially include all the components shown in FIG. 22. That is, some of the components, for example, the keypad 2320, the GPS chip 2360, the sensor 2365 and the SIM card 2325 may not be essential components. In this case, they may not be included in the UE.

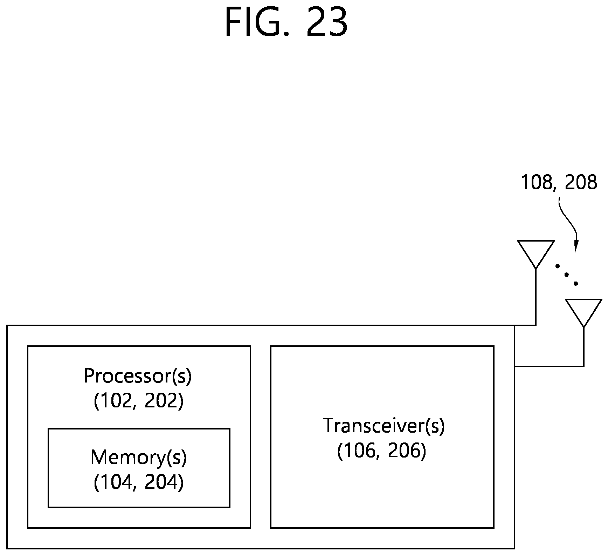

FIG. 23 shows another example of a wireless device.

Referring to FIG. 23, the wireless device may include at least one processor 102, 202, at least one memory 104, 204, at least one transceiver 106, 206, and one or more antennas 108, 208.

The example of the wireless device described in FIG. 19 is different from the example of the wireless described in FIG. 23 in that the processors 102 and 202 and the memories 104 and 204 are separated in FIG. 19 whereas the memories 104 and 204 are included in the processors 102 and 202 in the example of FIG. 23. That is, the processor and the memory may constitute one chipset.

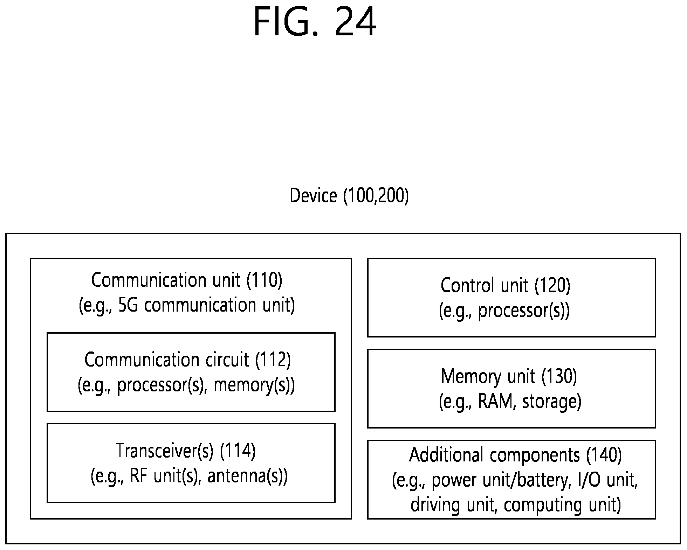

FIG. 24 shows another example of a wireless device applied to the present specification. The wireless device may be implemented in various forms according to a use-case/service.

Referring to FIG. 24, wireless devices 100 and 200 may correspond to the wireless devices of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

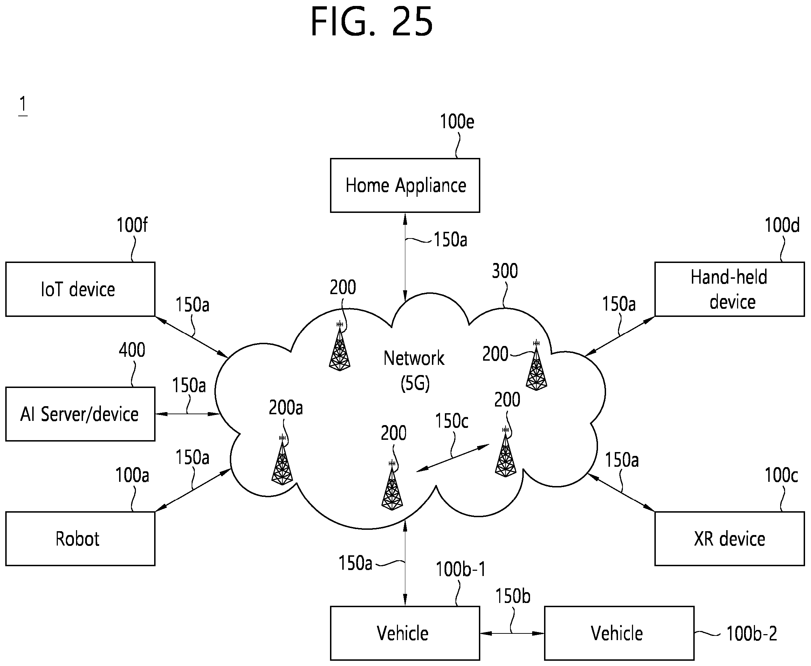

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 25), the vehicles (100b-1 and 100b-2 of FIG. 25), the XR device (100c of FIG. 25), the hand-held device (100d of FIG. 25), the home appliance (100e of FIG. 25), the IoT device (100f of FIG. 25), a digital broadcast UE, a hologram device, a public safety device, an MTC device, a medicine device, a fintech device (or a finance device), a security device, a climate/environment device, the AI server/device (400 of FIG. 25), the BSs (200 of FIG. 25), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. In addition, each element, component, unit/portion, and/or module within the wireless devices 100 and 200 may further include one or more elements. For example, the control unit 120 may be configured by a set of one or more processors. For example, the control unit 120 may be configured by a set of a communication control processor, an application processor, an Electronic Control Unit (ECU), a graphical processing unit, and a memory control processor. For another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 25 illustrates a communication system 1 applied to the present specification.

Referring to FIG. 25, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, NR supports a plurality of numerologies (or a plurality of ranges of subcarrier spacing (SCS)) in order to support a variety of 5G services. For example, when SCS is 15 kHz, a wide area in traditional cellular bands is supported; when SCS is 30 kHz/60 kHz, a dense-urban, lower-latency, and wider-carrier bandwidth is supported; when SCS is 60 kHz or higher, a bandwidth greater than 24.25 GHz is supported to overcome phase noise.

NR frequency bands may be defined as frequency ranges of two types (FR1 and FR2). The values of the frequency ranges may be changed. For example, the frequency ranges of the two types (FR1 and FR2) may be as shown in Table 5. For convenience of description, FR1 of the frequency ranges used for an NR system may refer to a "sub 6 GHz range", and FR2 may refer to an "above 6 GHz range" and may be referred to as a millimeter wave (mmW).

**[Table 5]**

| Frequency range designation | Corresponding frequency range | Subcarrier spacing |
|---|---|---|
| FR1 | 450 MHz - 6000 MHz | 15, 30, 60 kHz |
| FR2 | 24250 MHz - 52600 MHz | 60, 120, 240 kHz |

As illustrated above, the values of the frequency ranges for the NR system may be changed. For example, FR1 may include a band from 410 MHz to 7125 MHz as shown in Table 6. That is, FR1 may include a frequency band of 6 GHz (or 5850, 5900, 5925 MHz, or the like) or greater. For example, the frequency band of 6 GHz (or 5850, 5900, 5925 MHz, or the like) or greater included in FR1 may include an unlicensed band. The unlicensed bands may be used for a variety of purposes, for example, for vehicular communication (e.g., autonomous driving).

**[Table 6]**

| Frequency range designation | Corresponding frequency range | Subcarrier spacing |
|---|---|---|
| FR1 | 410 MHz - 7125 MHz | 15, 30, 60 kHz |
| FR2 | 24250 MHz - 52600 MHz | 60, 120, 240 kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method of operating a network-controlled repeater (NCR) including an NCR-mobile termination (MT) and an NCR-forward (Fwd) in a wireless communication system, the method comprising:
performing, by the NCR-MT, a measurement; and
transmitting, by the NCR-MT, feedback information based on a result of the measurement to a base station,
wherein the feedback information includes interference information for a pair of a downlink reception (DL Rx) beam in a control link (C-link) through which the NCR-MT receives control information from the base station and a downlink transmission (DL Tx) beam in an access link through which the NCR-Fwd transmits a signal to a user equipment (UE).

2. The method of claim 1, wherein the interference information includes an interference value of the DL Tx beam in the access link on the DL Rx beam in the control link.

3. The method of claim 2, wherein the interference value is greater than a threshold value.

4. The method of claim 1, wherein the feedback information comprises interference information for a plurality of beam pairs, based on a beam pair comprising a DL Rx beam among a plurality of DL Rx beams on a C-link from which the NCR-MT receives control information from the base station and a DL Tx beam among a plurality of DL Tx beams on an access link from which the NCR-Fwd transmits signals to the UE.

5. The method of claim 4, wherein the plurality of beam pairs include M (M is a natural number greater than or equal to 2) DL Rx beams in descending order of measured interference values among the plurality of DL Rx beams.

6. The method of claim 4, wherein the plurality of beam pairs include M (M is a natural number greater than or equal to 2) DL Rx beams preconfigured by the base station among the plurality of DL Rx beams.

7. The method of claim 1, wherein the feedback information includes preference information for a pair of a DL Rx beam preferred by the NCR-MT among DL Rx beams in the C-link through which the NCR-MT receives control information from the base station and a DL Tx beam preferred by the NCR-MT among DL Tx beams in the access link through which the NCR-Fwd transmits a signal to a UE.

8. The method of claim 1, further comprising:
receiving a message requesting the feedback information from the base station.

9. A network-controlled repeater (NCR) including an NCR- mobile termination (MT) and an NCR-forward (Fwd), the NCR comprising:
at least one transceiver;
at least one memory; and
at least one processor operably coupled with the at least one memory and the at least one transceiver,
wherein the at least one processor is adapted to:
perform, by the NCR-MT, a measurement; and
transmit, by the NCR-MT, feedback information based on a result of the measurement to a base station,
wherein the feedback information includes interference information for a pair of a downlink reception (DL Rx) beam in a control link (C-link) through which the NCR-MT receives control information from the base station and a downlink transmission (DL Tx) beam in an access link through which the NCR-Fwd transmits a signal to a user equipment (UE).

10. An apparatus of a network-controlled repeater (NCR) including an NCR-mobile termination (MT) and an NCR-Forwarding (Fwd), the apparatus comprising:
at least one memory; and
at least one processor operably coupled to the at least one memory,
wherein the at least one processor is adapted to:
perform, by the NCR-MT, a measurement; and
transmit, by the NCR-MT, feedback information based on a result of the measurement to a base station,
wherein the feedback information includes interference information for a pair of a downlink reception (DL Rx) beam in a control link (C-link) through which the NCR-MT receives control information from the base station and a downlink transmission (DL Tx) beam in an access link through which the NCR-Fwd transmits a signal to a user equipment (UE).

11. A method of operating a base station in a wireless communication system, the method comprising:
transmitting a message requesting feedback information to a network-controlled repeater (NCR)-MT (mobile termination) of an NCR including the NCR-MT and an NCR- forward (Fwd), and
receiving the feedback information from the NCR-MT,
wherein the feedback information includes interference information for a pair of a downlink reception (DL Rx) beam in a control link (C-link) through which the NCR-MT receives control information from the base station and a downlink transmission (DL Tx) beam in an access link through which the NCR-Fwd transmits a signal to a user equipment (UE).

12. A base station, comprising:
at least one transceiver;
at least one memory; and
at least one processor operably coupled to the at least one transceiver and the at least one memory,
wherein the at least one processor is adapted to:
transmit a message requesting feedback information to a network-controlled repeater (NCR)-MT (mobile termination) of an NCR including the NCR-MT and an NCR- forward (Fwd), and
receive the feedback information from the NCR-MT,
wherein the feedback information includes interference information for a pair of a downlink reception (DL Rx) beam in a control link (C-link) through which the NCR-MT receives control information from the base station and a downlink transmission (DL Tx) beam in an access link through which the NCR-Fwd transmits a signal to a user equipment (UE).
